# EUROPEAN PATENT SPECIFICATION

(11) **EP 1 034 643 B1**
(45) Date of publication and mention of the grant of the patent: **16.05.2007**
(21) Application number: 98954883.9
(22) Date of filing: 02.11.1998
(51) Int. Cl.: H04L 12/58

(54) **PROCEDURE AND SYSTEM FOR DELIVERY OF E-MAIL TO MODEM-CONNECTED USER**
VERFAHREN UND SYSTEM ZUR ABGABE ELEKTRONISCHER POST ZU EINEM MIT MODEM GEKOPPELTEN BENUTZER
PROCEDE ET SYSTEME PERMETTANT D'ENVOYER DU COURRIEL A UN UTILISATEUR CONNECTE PAR MODEM

(30) Priority: 05.11.1997 SE 9704038
(43) Date of publication of application: 13.09.2000
(73) Proprietor: TELIA AB, 123 86 Farsta (SE)
(72) Inventor: GARNEIJ, Fredrik, S-412 61 Göteborg (SE)
(74) Representative: Hopfgarten, Nils
(86) International application number: PCT/SE1998/001980
(87) International publication number: WO 1999/022576

(56) References cited:
- EP-A2- 0 736 989
- WO-A2-97/17765

## Description

### Field of the invention

The present invention relates to a procedure and an arrangement to deliver e-mail to modem-connected Internet-users. The invention facilitates automatic transmission of e-mail to not permanently connected e-mail users in a tele and data communication system.

### Prior art

Electronic mail, so called e-mail, has become an increasingly growing method for communication. An impediment to such communication is when the addressees are lacking permanent connection to the transmission media Internet. The problem for these users is that they themselves have to check whether they have received e-mail and attend to that it is collected. The known method is called polling, i.e. calling and collecting at regular intervals, for instance every 4:th hour.

There also exist previous systems in which the e-mail server or a client to this at the service provider's has called the home user and established a modem connection. This results in a cost which has to be debited the home users, which is a circumstantial method.

In the patent literature there is a number of documents in this field. EP 0 736 989 discloses a mail notification system. Mails are stored temporarily in a host computer in the mail system, and the host computer informs the user when a new message for the user arrives to the host computer. The host computer may also identify a message that the sender considers being urgent. WO 97/01919 describes a device for i.a. receiving electronic mail. The device is intended to be connected between the telephone jack and some other electronic device such as a telephone answering machine. The document describes different ways of collecting the mail. One of the methods implies that the central mail server signals to the device that mail is to be collected by some signal protocol which will not cost call debiting. One of the methods mentioned is to use a ringing protocol where the length, or the tone, of the ringing signals can be coded with predefined significations.

US-A-5 293 250 describes a method and a device to inform a distributed terminal about that e-mail has been received at the server. The device, which is connected between the telephone network and the terminal, can inform the user by some suitable indication, such as a lamp.

US-A-5 333 152 relates to a system for establishing a communication link between a local and a distributed computer. The distributed computer is equipped with a control unit which can activate the computer by receiving signals by a DTMF-receiver.

US-A-5 396 546 describes a device intended to be connected between an ordinary TV-set and a communication network. The device, which i.a. can receive e-mail, has possibility to automatically collect e-mail by calling a mail server on a periodical basis.

WO 97/17765 shows a telephone answering machine which, by automatically calling a service provider at fixed times can collect e-mail, if any.

The present invention solves the above mentioned problems with the previously known technology by signalling instead of polling. A setup is made only if there really is e-mail to be collected, and if the user so wishes this is executed as soon as e-mail has been received at the service provider's e-mail server. Because the home user is initiating the Internet-connection, the cost for the call will directly end up at the home user's.

### Summary of the invention

Consequently the present invention relates to a procedure to deliver e-mail from a mail service provider to a modem-ccnnected user which solves the above mentioned problem.

According to the invention, the service provider transmits a message via the telephone network to the user which establishes an Internet-connection to the service provider, whereupon the service provider delivers the e-mail via Internet to the user. The service provider preferably checks signalling conditions before the message is transmitted to the user. The message is preferably transmitted by DTMF-signalling.

The invention also relates to a corresponding system for performing the procedure.
The invention is defined in the enclosed claims.

### Brief description of the drawings

The invention now will be described in detail with reference to the enclosed drawings, in which:
Figure 1 is a diagram over the e-mail environment according to previously known technology; and
Figure 2 is a similar diagram over the arrangement according to the present invention.

### Detailed description of preferred embodiments of the invention

E-mail has become a more and more common way of communicating. The use has spread from the academic world to the home, and today one has possibility to via e-mail correspond with a continuously increasing number of public authorities, companies and private persons. However, there are aspects of the handling of e-mail which prevents the real breakthrough of this medium.

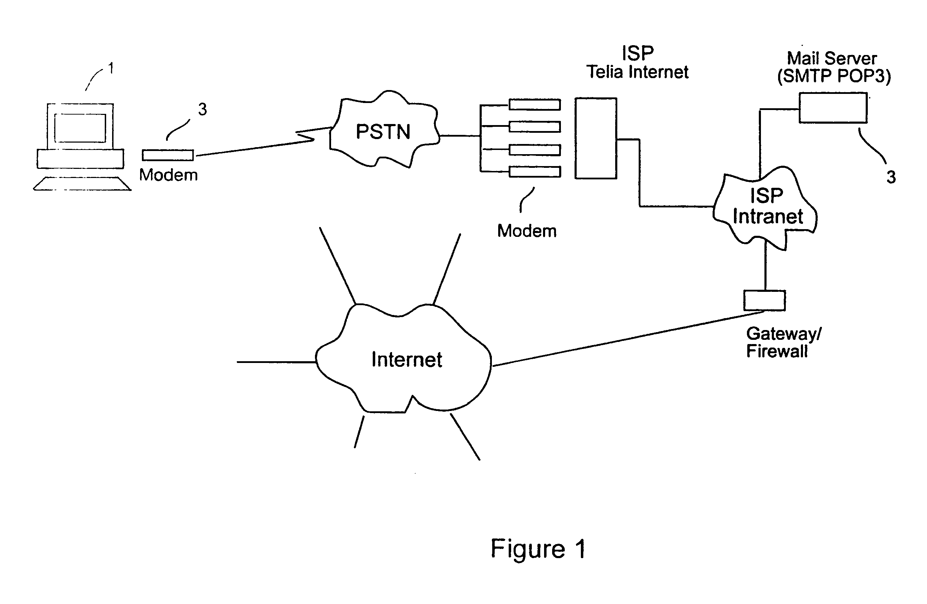

In Figure 1 is shown by diagram a common situation for a user connected to the Internet. The user has a computer, 1, which via a modem, 2, is connected to the public telephone network PSTN (Public Switched Telephone Network). The user thus has no permanent connection to the Internet, but establishes a connection via a telephone number by means of his/her modem. The service provider ISP (Internet Service Provider) has a mail server,3 , which handles mail to a number of users, among others the user 1. The problem for these users is that they themselves regularly have to check whether they have received e-mail, and attend to that the e-mail is collected, unlike users with permanent connection to the Internet. Today there is lacking a delivery system for e-mail to the modem-connected called users. The technical solution which the present invention suggests can be compared to an "electronic postman". The solution evades the technical problems of two-way communication between not permanently connected users at a point of time which can not be predicted, i.e. when e-mail to a not permanently connected user arrives.

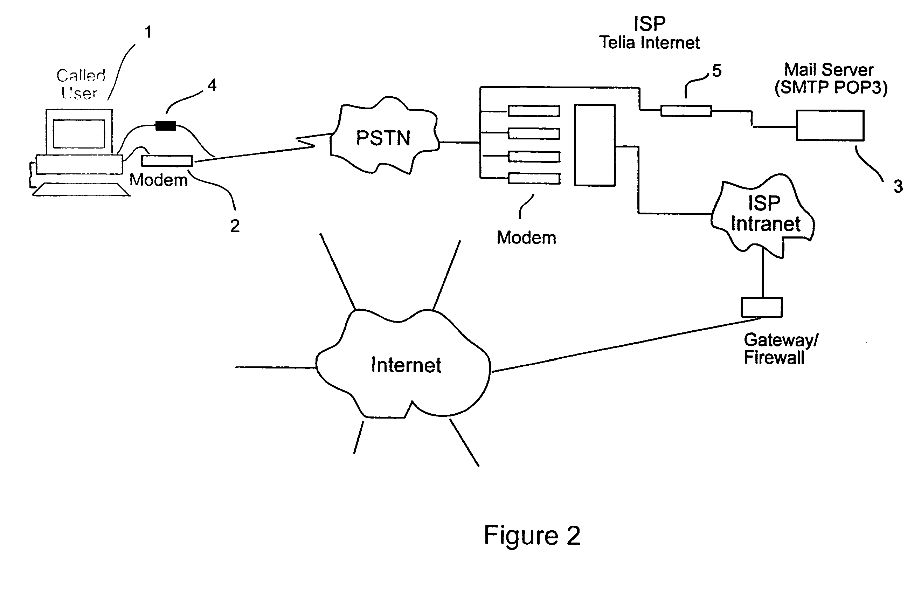

In Figure 2 is shown the arrangement according to the present invention, which solves the above mentioned problem. In addition to the previous equipment according to prior art, the user has a DTMF-decoder, 4, connected to the parallell port of the computer, 1. The DTMF-decoder is a number display which can receive Dual-Tone Multi-Frequency Signalling (DTMF). The service provider ISP also has a DTMF-transmitter, 5, which is used in a way which is described below.

In addition the arrangement includes new software (not shown). At the service provider's there is a signalling server in connection to the mail server, 3. At the user there is a signalling client at the computer, 1. The user also can have a local e-mail server POP3 (Post Office Protocol 3-server according to Internet RFC 1939). There also is a web-based interface for remote administration of signalling conditions which are stored at the service provider's.

The arrangement operates according to the following. The function is wholly automatic, i.e there need not be a person as operator present at the user's for performing functions.

Signalling conditions are stored in the e-mail log (SMTP mail-log) of the mail-server. These condition have been arranged by the user himself/herself via the web-interface. A condition may for instance be "make signals if there has arrived two letters from fredrik@telia.se, and the time is between 6 and 10, p.m.". The signalling server compares the e-mail log with the signalling conditions. If some of the user's entered conditions are fulfilled, the signalling server transmits a message to the user. The message preferably is a specific number which is transmitted by Dual-Tone Multi-Frequency Signalling, DTMF. The message is transmitted to the telephone number where the user's computer is connected and is shown via number display on the DTMF-decoder, 4. The signalling can be performed silently, i.e. the connection is disconnected when the number has been transferred, and before the ringing signal has been generated.

The signalling client at the computer, 1, catches the message, i.e the specific number via the DTMF-decoder, 4, and after that initiates collection of the e-mail according to the following. The signalling client connects the computer to the Internet, for instance via Windows 95, or AS (Us Remote Access Service; Sw. fjärranslutning), i.e. the same connection which the user is using for surfing. After that, the signalling client contacts the mail-server, 3, and the e-mail is collected and is buffered locally by the signalling client at the user's computer. When this has been performed, the signalling client disconnects the connection.

Parallell with the signalling client, a local e-mail server is run at the user's which attends to the buffered e-mail. The user's POP3-compatible e-mail software (for instance Microsoft Internet Mail/Exchange) collects the e-mail from this local e-mail server. This results in that the modem-connected user's and the permanently connected user's ε-mail notification will be exactly identical. By that, one has achieved the same functionality at both called modem-connected users, and permanently connected e-mail users.

Consequently the present invention provides a procedure and arrangement for delivery of e-mail with a number of advantages compared with previously known technology. The e-mail notification will be the same for modem-connected and permanently connected Internet-users. The modem-connected user need not make an unnecessary setup only to check if there has arrived e-mail. A setup is only established when there really is e-mail to be collected, and if the user so wishes, this can be made as soon as e-mail has been received at the service provider's mail server. The costs for the setup to the Internet will end up directly at the user's, because it is he/she who is calling. A regular delivery of e-mail also results in a decreased need for buffering storage at the mail server, 3, at the Internet service provider's.

The invention can be realized with commercial number displays for dual-tone multi-frequency signalling which are supplemented with simple hardware and software, as is easily realized by a person skilled in the art. The invention is only limited by the patent claims below.

## Claims

1. Procedure to deliver e-mail from a service provider to a modem-connected user computer (1), wherein the service provider (ISP) checks signalling conditions and if one of the conditions are met the service provider (ISP) transmits a message via the telephone network (PSTN) to the user computer (1), **characterized in that** said signalling conditions are established by the user himself via the web interface, **in that** in response to receiving the message the user computer (1) makes an Internet-connection to the service provider (ISP), and **in that** the service provider (ISP) delivers the e-mail to the user via the Internet-connection.

2. Procedure according to claim 1
**characterized in that** the service provider (ISP) transmits the message by means of DTMF-signalling.

3. Procedure according to claim 1 or 2
**characterized in that** the transmission of the message is cut off as soon as the message has been received.

4. Procedure according to some of the previous claims, **characterized in that** the e-mail is buffered at the user computer (1).

5. Procedure according to claim 4,
**characterized in that** a local mail-server at the user (1) attends to the buffered e-mail.

6. System for delivery of e-mail from a service provider (ISP) to a user, comprising a mail server (2), connected to the Internet and to a public telephone network (PSTN), and a user computer (1) with e-mail-operation and connected to the Internet and to the public telephone network (PSTN) via modem (2), said service provider (ISP) having a mail server with an e-mail-log in which signalling conditions are stored, and a signalling server for transmission of a message to the user **characterized in that** said signalling conditions are arranged by the user, and **in that** the user computer has a signalling client to make an Internet-connection to the service provider and to collect the e-mail to the user via the Internet-connection in response to receiving the message.

7. System according to claim 6,
**characterized in that** the signalling client has a DTMF-decoder (4) for reception of the message via the telephone network (PSTN).

8. System according to claim 7 or 8,
**characterized in that** the user has a local mail server to buffer the e-mail.

9. System according to claim 6, 7 or 8,
**characterized in that** the signalling server is arranged to check signalling conditions before the message is transmitted to the user computer.

## Patentansprüche

1. Verfahren zum Liefern von E-Mail von einem Dienstprovider zu einem mit einem Modem verbundenen Benutzercomputer (1), wobei der Dienstprovider (ISP) Signalisierbedingungen prüft und, falls eine der Bedingungen erfüllt ist, der Dienstprovider (ISP) eine Meldung über das Telefonnetz (PSTN) zum Benutzercomputer (1) sendet, **dadurch gekennzeichnet, dass** die Signalisierungsbedingungen durch den Benutzer selbst über die Webschnittstelle eingerichtet werden, dass als Reaktion auf Empfang der Meldung der Benutzercomputer (1) eine Internetverbindung zu dem Dienstprovider (ISP) herstellt, und dass der Dienstprovider (ISP) die E-Mail zum Benutzer über die Internetverbindung liefert.

2. Verfahren nach Anspruch 1, **dadurch gekennzeichnet, dass** der Dienstprovider (ISP) die Meldung mit Hilfe von DTMF-Signalisierung überträgt.

3. Verfahren nach Anspruch 1 oder 2, **dadurch gekennzeichnet, dass** die Übertragung der Meldung beendet wird, sobald die Meldung empfangen worden ist.

4. Verfahren nach einem der vorangehenden Ansprüche, **dadurch gekennzeichnet, dass** die E-Mail beim Benutzercomputer (1) gepuffert wird.

5. Verfahren nach Anspruch 4, **dadurch gekennzeichnet, dass** sich ein lokaler Mailserver beim Benutzer (1) mit der gepufferten E-Mail befasst.

6. System zum Liefern von E-Mail von einem Dienstprovider (ISP) zu einem Benutzer, das einen E-Mail Server (2), der mit dem Internet und mit einem öffentlichen Telefonnetz (PSTN) verbunden ist, und einen Benutzercomputer (1) mit E-Mailbetrieb, und der mit dem Internet und mit dem öffentlichen Telefonnetz (PSTN) über Modem (2) verbunden ist, aufweist, welcher Dienstprovider (ISP) einen Mailserver mit einem E-Mailprotokoll, in dem Signalisierungsbedingungen gespeichert sind, und einen Signalisierungsserver zum Übertragen einer Meldung zum Benutzercomputer hat, **dadurch gekennzeichnet, dass** die Signalisierungsbedingungen durch den Benutzer arrangiert werden und dass der Benutzercomputer einen Signalisierklient hat, um eine Internetverbindung zu dem Dienstprovider herzustellen und die E-Mail zum Benutzer über die Internetverbindung als Reaktion auf Empfang der Meldung einzunehmen.

7. System nach Anspruch 6, **dadurch gekennzeichnet, dass** der signalisierende Klient einen DTMF-Detektor (4) für Empfang der Meldung über das Telefonnetz (PSTN) hat.

8. System nach Anspruch 7 oder 8, **dadurch gekennzeichnet, dass** der Benutzer einen lokalen Mailserver zum Puffern der E-Mail hat.

9. System nach Anspruch 6, 7 oder 8, **dadurch gekennzeichnet, dass** der Signalisierserver dazu ausgebildet ist, Signalisierbedingungen zu prüfen, bevor die Meldung zum Benutzercomputer übertragen wird.

## Revendications

1. Procédure pour remettre un courriel d'un fournisseur de services à l'ordinateur d'un utilisateur connecté par modem, dans laquelle le fournisseur de services (ISP) vérifie les conditions de signalisation, et si une des conditions est remplie, le fournisseur de services (ISP) transmet un message via le réseau téléphonique (PSTN) à l'ordinateur de l'utilisateur (1), **caractérisée en ce que** lesdites conditions de signalisation sont établies par l'utilisateur lui-même via l'interface Web, **en ce que**, en réponse à la réception du message, l'ordinateur de l'utilisateur (1) effectue une connexion Internet au fournisseur de services (ISP), et **en ce que** le fournisseur de services (ISP) remet le courriel à l'utilisateur via la connexion Internet.

2. Procédure selon la revendication 1, **caractérisée en ce que** le fournisseur de services (ISP) transmet le message au moyen de la signalisation DTMF.

3. Procédure selon la revendication 1 ou 2, **caractérisée en ce que** la transmission du message est arrêtée dès que le message a été reçu.

4. Procédure selon certaines des revendications précédentes, **caractérisée en ce que** le courriel est mis en mémoire tampon au niveau de l'ordinateur de l'utilisateur (1).

5. Procédure selon la revendication 4, **caractérisée en ce qu'**un serveur de courrier local au niveau de l'utilisateur (1) s'occupe du courriel mis en mémoire tampon.

6. Système pour la remise de courriel d'un fournisseur de services (ISP) à un utilisateur, comprenant un serveur de courrier (2), connecté à Internet et à un réseau téléphonique public (PSTN), et l'ordinateur d'un utilisateur (1) avec une opération de courriel et connecté à Internet et au réseau téléphonique public (PSTN) via un modem (2), ledit fournisseur de services (ISP) ayant un serveur de courrier avec un journal de courriels dans lequel les conditions de signalisation sont stockées, et un serveur de signalisation pour la transmission d'un message à l'ordinateur de l'utilisateur, **caractérisé en ce que** lesdites conditions de signalisation sont fixées par l'utilisateur, et **en ce que** l'ordinateur de l'utilisateur a un client de signalisation pour effectuer une connexion Internet au fournisseur de services et pour collecter le courriel vers l'utilisateur via la connexion Internet en réponse à la réception du message.

7. Système selon la revendication 6, **caractérisé en ce que** le client de signalisation a un décodeur DTMF (4) pour la réception du message via le réseau téléphonique (PSTN).

8. Système selon la revendication 7 ou 8, **caractérisé en ce que** l'utilisateur a un serveur de courrier local pour mettre en mémoire tampon le courriel.

9. Système selon la revendication 6, 7 ou 8, **caractérisé en ce que** le serveur de signalisation est agencé pour vérifier les conditions de signalisation avant que le message soit transmis à l'ordinateur de l'utilisateur.
